**Europäisches Patentamt**

**European Patent Office**

**Office européen des brevets**

(19)

(11) Veröffentlichungsnummer: **0 190 460**
**B1**

# (12) EUROPÄISCHE PATENTSCHRIFT

(45) Veröffentlichungstag der Patentschrift:
27.04.88

(51) Int. Cl.⁴: **E 21 D 21/00**

(21) Anmeldenummer: **85116557.1**

(22) Anmeldetag: **24.12.85**

(54) Verankerungsvorrichtung für das Zugglied eines Ankers, insbesondere eines Felsankers.

(30) Priorität: **30.01.85 DE 3503012**

(43) Veröffentlichungstag der Anmeldung:
**13.08.86 Patentblatt 86/33**

(45) Bekanntmachung des Hinweises auf die Patenterteilung:
**27.04.88 Patentblatt 88/17**

(84) Benannte Vertragsstaaten:
**AT BE CH DE FR GB IT LI SE**

(56) Entgegenhaltungen:
**DE-A-3 145 923**
**DE-B-1 187 214**
**DE-B-1 288 543**
**DE-B-1 583 803**
**GB-A-2 082 725**

(73) Patentinhaber: **Dyckerhoff & Widmann**
**Aktiengesellschaft, Erdinger Landstrasse 1,**
**D-8000 München 81 (DE)**

(72) Erfinder: **Der Erfinder hat auf seine Nennung**
**verzichtet**

(74) Vertreter: **Patentanwälte Dipl.- Ing. F.W. Möll**
**Dipl.- Ing. H.Ch. Bitterich, Langstrasse 5**
**Postfach 2080, D-6740 Landau (DE)**

EP 0 190 460 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Verankerungsvorrichtung für das Zugglied eines Ankers, insbesondere eines Felsankers, bei dem das Zugglied aus einem ein- oder mehrteiligen Stahlstab mit vorzugsweise auf einer Schraubenlinie liegenden und zumindest ein Teilgewinde bildenden Kraftübertragungsrippen und die Verankerungsvorrichtung aus einem auf ein Ende des Ankerstabes aufbringbaren und gegen das Gebirge abstützbaren Verankerungselement bestehen, das mit zum Eingriff mit den Kraftübertragungsrippen des Ankerstabes geeigneten, zwischen Vorsprüngen gebildeten Ausnehmungen versehen ist, wobei die Verankerungsvorrichtung weiterhin so ausgebildet ist, daß bei Überschreitung einer vorgegebenen Längszugkraft des Ankerstabes eine Relativbewegung zwischen diesem und dem Verankerungselement bewirkbar ist, bis die Längszugkraft wieder unterschritten ist.

Felsanker werden im Bergbau für den Ausbau von Strecken verwendet. Als Zugglieder für solche Anker eignen sich vor allem warmgewalzte Stahlstäbe, die entlang ihres Umfangs mit warmgewalzten, entlang einer Schraubenlinie verlaufenden Kraftübertragungsrippen versehen sind. Diese Rippen bilden so ein Teilgewinde, auf das eine mit einem entsprechenden Gegengewinde versehene Verankerungsmutter aufgeschraubt werden kann. Diese Stahlstäbe, die ein- oder mehrteilig ausgebildet sein können, besitzen durch die Rippen einerseits eine gute Verbundwirkung im Bereich der Verankerungsstrecke, wo sie entweder in Kunstharzkleber oder in einen Verpreßkörper aus Zementmörtel eingebettet sind und wie ein Betonrippenstahl wirken; andererseits kann an der Luftseite die Verankerung in einfacher Weise durch Aufschrauben einer entsprechenden Verankerungsmutter erfolgen.

Vor allem bei tiefen Lagerstätten wird der Gebirgsdruck durch den Ausbau der Strecke mittels Felsankern nur temporär gehalten, während sich das Gebirge ständig weiter verformt. Dabei besteht das Problem, daß einerseits Verformungen des Gebirges zugelassen werden müssen, damit sich nach dem Ausbruch ein neuer Gleichgewichtszustand einstellen kann, daß andererseits aber die Verformungen eine Größenordnung erreichen, welche die Dehnfähigkeit von Ankerzuggliedern aus Stahl weit überschreitet. So sind Felsanker mit an der Luftseite nachgiebigen Verankerungen bekannt geworden, mit denen bei Überschreitung einer vorgegebenen Längszugkraft des Ankers eine Relativbewegung zwischen dem Ankerstab und dem Verankerungselement bewirkbar ist, bis die vorgegebene Längszugkraft wieder unterschritten ist.

Bei einer nachgiebigen Verankerungsvorrichtung der eingangs angegebenen Art ist das Verankerungselement, das mit zum Eingriff mit den schräg zur Staboberfläche verlaufende Flanken aufweisenden Kraftübertragungsrippen des Ankerstabes geeigneten, ebenfalls schräg verlaufende Flanken aufweisenden Ausnehmungen versehen ist, in radialer Richtung quer zur Längsachse des Ankerstabes elastisch aufweitbar ausgebildet, so daß es bei Überschreitung der vorgegebenen Ankerlängszugkraft über die Kraftübertragungsrippen gleitend entlang des Ankerstabes um eine gewisse Strecke versetzbar ist (DE-A-31 45 923). Das Verankerungselement kann als Mutter ausgebildet sein, wobei die Ausnehmungen mit den dazwischenliegenden Vorsprüngen Gewindegänge bilden.

Abgesehen davon, daß dieses bekannte Verankerungselement, um die elastische Aufweitung gewährleisten zu können, verhältnismäßig aufwendig herzustellen ist, wechselt die Verankerungskraft jeweils zwischen einem Maximum und einem Minimum, nämlich dann, wenn Kraftschluß besteht bzw. wenn gerade eine Kraftübertragungsrippe des Ankerstabes überwunden ist.

Bei einer anderen bekannten nachgiebigen Verankerungsvorrichtung besteht das Verankerungselement aus einer von dem Ankerstab durchsetzten Stahlhülse, deren sich zur Ankerplatte hin verjüngende Bohrung mit stückigem Füllgut, z. B. Stahlkugeln, gefüllt und abgeschlossen ist (DE-A-27 51 020). Bei einer auf den Ankerstab wirkenden Zugkraft wird das in dem Hohlraum befindliche Füllgut in den sich verjüngenden Spaltraum eingepreßt. Dabei entstehen an dem stückigen Füllgut bzw. zwischen diesem und dem Ankerstab örtlich so hohe Pressungen, daß in diesen Teilen neben elastischen auch plastische Verformungen hervorgerufen werden, wodurch Relativverschiebungen zwischen diesen Teilen auftreten.

Infolge der nicht beeinflußbaren Lage des stückigen Füllgutes in dem Hohlraum sind weder die Ankerkraft, noch das Maß des Nachgebens der Verankerung exakt bestimmbar. Außerdem sind für die Wirksamkeit der Verankerung neben elastischen, vor allem plastische Verformungen notwendig, die zu Beeinträchtigungen der Festigkeit des Stahlstabes führen können.

Schließlich sind Felsanker bekannt, bei denen auf dem luftseitigen Ende des Ankerstabes ein Gewinde angebracht ist, das über den Schaft des Ankerstabes hinausragt. Durch einen auf den Schaft des Ankerstabes aufgeschobenen z. B. konisch gelochten Körper, der sich einerseits gegen den Fels und andererseits auf die über den Schaft hinausragenden Gewindegänge abstützt, wird die Nachgiebigkeit dadurch erreicht, daß die Gewindegänge nacheinander deformiert bzw. abgeschert werden.

Abgesehen davon, daß bei diesem Anker das Verankerungselement immer von der Schaftseite des Ankerstabes her aufgeschoben werden muß, die Verankerung also nicht von der Luftseite her aufgebaut und so die erforderliche Spannung des Ankerstabes eingestellt werden kann, besteht ein weiterer Nachteil dieser Verankerung darin, daß das mit dem Gewinde versehene Ende des Ankerstabes durch den Verankerungskörper wie durch eine Ziehdüse hindurchgezogen wird, so daß keine Möglichkeit besteht, die jeweilige Ankerkraft beeinflussen zu können.

Der Erfindung liegt die Aufgabe zugrunde, bei einer nachgiebigen Verankerungsvorrichtung der eingangs angegebenen Art eine Möglichkeit zu schaffen, um einen möglichst kontrollierten Gleitvorgang mit einem definierbaren, möglichst gleichmäßigen Gleitwiderstand zu schaffen, so daß die Verankerungskraft möglichst konstant bleibt.

Diese Aufgabe wird nach der Erfindung dadurch gelöst, daß das Verankerungselement aus einem Material besteht, das eine höhere Festigkeit aufweist als das Material des Ankerstabes, daß die Flanken der Vorsprünge des Verankerungselements zur Kraftübertragung jeweils nur mit Teilflächen an den Kraftübertragungsrippen des Ankerstabes anliegen und daß bei Überschreitung der vorgegebenen Längszugkraft die Kraftübertragungsrippen des Ankerstabes im Ausmaß der miteinander in Eingriff befindlichen Teilflächen abtragbar sind. Zweckmäßig ist das Verankerungselement als Mutter ausgebildet, bei der die Vorsprünge zumindest ein Teilgewinde bilden und die Ausnehmungen mit den ein Schraubgewinde bildenden Kraftübertragungsrippen des Ankerstabes korrespondieren.

Der Erfindung liegt das Tragverhalten einer Verankerungsmutter auf einem mit auf einer Schraubenlinie liegenden und ein Gewinde bildenden Kraftübertragungsrippen versehenen Ankerstab zugrunde. Wenn die Stahlgüte der Verankerungsmutter deutlich größer ist als die des Ankerstabes, werden bei Überschreiten einer vorgegebenen Ankerlängszugkraft die Kraftübertragungsrippen des Ankerstabes abgeschert. Eine normale Mutter könnte die Forderung nach einem konstanten Gleitwiderstand nicht erfüllen. Würde sie als Verankerungselement verwendet, dann würde zunächst ein Spitzenwiderstand auftreten, der daraus folgt, daß alle Gewindegänge der Mutter mit den Kraftübertragungsrippen des Ankerstabes im Eingriff sind und abgetragen werden müssen. Nach dem ersten Abtragen der anfangs in Eingriff miteinander befindlichen Kraftübertragungsrippen würde dieser Widerstand aber sehr stark absinken, weil dann immer nur die jeweils nächstfolgende Kraftübertragungsrippe in Eingriff mit der Mutter gelangt.

Der Grundgedanke der Erfindung besteht darin, zur Kraftübertragung jeweils nur Teilflächen heranzuziehen und die Summe der Kraftübertragungsflächen zwischen dem Verankerungselement und den Kraftübertragungsrippen des Ankerstabes so zu wählen bzw. die Teilflächen so zueinander anzuordnen, daß die Kraftübertragungsrippen des Ankerstabes bei Lastüberschreitung entlang seiner Längsachse möglichst gleichmäßig abgetragen werden und somit die Ankerkraft möglichst konstant bleibt. Dabei kann die Größe der Ankerkraft nicht nur durch die Größe und/oder die Form der Teilflächen, sondern selbstverständlich auch durch die Länge des Verankerungselements, d.h. die Anzahl der mit den Kraftübertragungsrippen zusammenwirkenden Vorsprüngen und Ausnehmungen sowie durch unterschiedliche Festigkeiten von Verankerungselement und Ankerstab beeinflußt werden.

Vor diesem Hintergrund umfaßt die Erfindung zwei im wesentlichen gleichwertige grundsätzliche Ausgestaltungen. Die eine Ausgestaltung der Erfindung besteht darin, daß die jeweils ein vollständiges Gewinde bildenden Vorsprünge aufeinanderfolgender Gewindegänge der Verankerungsmutter gegenüber dem Grund der Ausnehmungen eine in Richtung der auf den Ankerstab wirkenden Längszugkraft zunehmende Höhe aufweisen und daß die Flanken der Vorsprünge an den lastzugewandten Flanken der Kraftübertragungsrippen des Ankerstabes in einer solchen Weise angreifen, daß durch diese bei Überschreiten der vorgegebenen Längszugkraft die Kraftübertragungsrippen stufenweise abtragbar sind.

Dadurch wird erreicht, daß jeder Gewindegang der Verankerungsmutter - in Richtung der Ankerzugkraft gesehen - von den Kraftübertragungsrippen des Ankerstabes jeweils eine weitere Schicht abschält. Dies gelingt auf einfache Weise dadurch, daß das Gewinde der Verankerungsmutter von einer konischen Kernbohrung ausgehend erzeugt wird. So wird erreicht, daß die Gewindekehlen der Mutter, die mit den Kraftübertragungsrippen des Stabes schraubbar zusammenwirken müssen, bezogen auf die Längsachse der Mutter, gleiche Tiefe, bezogen auf die Innenfläche der Mutter aber unterschiedliche Tiefe aufweisen. Da die dem Gleiten der Mutter entgegenwirkende Scherkraft von der jeweiligen Scherfläche abhängt, diese aber immer konstant bleibt, wird so ein weitgehend konstanter Gleitwiderstand erzeugt.

Dabei können einerseits die Flanken der Vorsprünge der Verankerungsmutter die gleiche oder eine steilere Neigung aufweisen wie die Flanken der Kraftübertragungsrippen des Ankerstabes, so daß durch die jeweils an der Oberfläche und den lastzugewandten Flanken der Vorsprünge gebildeten Kanten die Kraftübertragungsrippen des Ankerstsbes durch Abscheren abtragbar sind. Besonders zweckmäßig erscheint es dabei, wenn die Flanken der Vorsprünge der Verankerungsmutter rechtwinklig zu ihrer Längsachse verlaufen. Diese Flanken bilden dann zusammen mit der Innenfläche der Mutter Schneidkanten, die ein problemloses Abscheren der Kraftübertragungsrippen in der jeweiligen Höhe gewährleisten. Zudem führt die Kombination von unterschiedlichen Flankenausbildungen zwischen der Verankerungsmutter und dem Ankerstab bei einem sich konisch vergrößernden Kerndurchmesser der Mutter zu einem Steigungsunterschied zwischen Mutter und Stab. Dieser hat zur Folge, daß die Kraftübertragungsrippen des Ankerstabes erst nach einem gewissen Verschiebeweg nacheinander in Eingriff mit der Mutter gelangen. Dadurch wird eine weitere Vergleichmäßigung des Gleitens erzielt.

Die lastzugewandten Flanken der Vorsprünge der Verankerungsmutter können auch flacher geneigt sein als die Flanken der Kraftübertragungsrippen des Ankerstabes, so daß durch die Flanken der Vorsprünge die Kraftübertragungsrippen des Ankerstabes im Wege der Kaltverformung abtragbar sind. Diese Kaltverformung der Kraftübertragungsrippen hat eine Reduzierung der Rippenhöhe und eine Verbreiterung der Rippenbasis zur Folge, die in gewissem Maße sogar zu einer Kaltverfestigung des Ankerstabes führt.

Ohne den Grundsatz zu verlassen, daß die Vorsprünge der Verankerungsmutter ein vollständiges Gewinde bilden sollen, besteht auch die Möglichkeit, daß die Vorsprünge der Verankerungsmutter Unterbrechungen aufweisen; diese können in Richtung der Längsachse der Verankerungsmutter miteinander fluchten. Dadurch lassen sich über den Umfang der Vorsprünge bzw. der Kraftübertragungsrippen des Ankerstabes die für die Kraftübertragung zur Verfügung stehenden Teilflächen so dimensionieren, daß eine bestimmte Gleitkraft erreicht werden kann. Auf diese Weise ist es z. B. möglich, etwaige beim Walzen der Stäbe auftretende Toleranzen auszugleichen, indem z. B. einem Stab mit hohen Rippen eine Verankerungsmutter mit breiten Ünterbrechungen zugeordnet wird bzw. umgekehrt.

Die zweite grundsätzliche Ausgestaltung der Erfindung besteht darin, daß anstelle der vorstehend beschriebenen Höhenstaffelung der Vorsprünge der Verankerungsmutter eine am Ümfang zueinander versetzte Verzahnung von Vorsprungteilen vorgesehen, d.h. entlang der Gewindegänge nur eine punktuelle Verzahnung zur Kraftübertragung zwischen dem Ankerstab und der Verankerungsmutter angebracht wird. Bei dieser Ausgestaltung der Erfindung bestehen die Vorsprünge der Verankerungsmutter aus Nocken, die an der Innenseite der Verankerungsmutter in gegenseitigen Abständen voneinander entlang einer Schraubenlinie angeordnet sind und ein Teilgewinde bilden. Die lastzugewandten Flanken und/oder Seitenflächen der Nocken greifen dann an den jeweils vollständige Gewindegänge bildenden Kraftübertragungsrippen des Ankerstabes in einer solchen Weise an, daß durch diese bei Überschreiten der vorgegebenen Längszugkraft die Kraftübertragungsrippen jeweils über die Breite der Nocken abtragbar sind.

Zweckmäßig sind die Nocken entlang der Schraubenlinie der Verankerungsmutter gleichmäßig verteilt angeordnet. Die Nocken aufeinanderfolgender Gewindegänge können in Umfangsrichtung gegeneinander versetzt angeordnet sein. Damit ist gewährleistet, daß bei axialem Gleiten des Stabes gegenüber der Verankerungsmutter um einen Rippenabstand der jeweils nachfolgende Gewindegang der Verankerungsmutter auf einen Rippenteil des Ankerstabes trifft, der von dem vorangegangenen Gewindegang der Mutter noch nicht abgeschält wurde. Wenn die Nocken derart gegeneinander versetzt sind, daß sie in der Normalprojektion der Verankerungsmutter gesehen jeweils nebeneinander erscheinen, wird erreicht, daß über die Länge der Verankerungsmutter gesehen durch diese die Kraftübertragungsrippen des Ankerstabes vollständig abgeschert werden.

Zur weiteren Vergleichmäßigung des Gleitwiderstandes ist es zweckmäßig, die Nocken auch in Bezug auf die durch sie gebildete Schraubenlinie in Längsrichtung der Verankerungsmutter gegeneinander versetzt, vornehmlich um jeweils den gleichen Betrag gegeneinander versetzt anzuordnen. Dadurch wird erreicht, daß nicht alle Nocken jeweils eines Gewindegangs der Verankerungsmutter gleichzeitig an den Kraftübertragungsrippen des Ankerstabes angreifen, sondern um den Betrag des jeweiligen Versatzes nacheinander. Eine besondere Vergleichmäßigung des Gleitwiderstandes wird erreicht, wenn die Nocken innerhalb der Steigung des Muttergewindes um jeweils sich addierende Beträge gegeneinander versetzt angeordnet sind.

Es versteht sich von selbst, daß bei der Ausgestaltung der Nocken eine Vielfalt von geometrischen Anordnungen möglich ist, solange die Schraubbarkeit gewährleistet bleibt. So können die Nocken auch schräg zur Längsachse der Verankerungsmutter verlaufende Seitenflächen aufweisen, ja insgesamt in der Draufsicht keilförmig ausgebildet sein.

Eine grundsätzlich bei beiden Ausgestaltungen der Erfindung, also sowohl bei der Höhenstaffelung der Vorsprünge der Verankerungsmutter, als auch bei der am Umfang zueinander versetzten Verzahnung der Vorsprünge anwendbare vorteilhafte Weiterbildung besteht darin, daß die Verankerungsmutter aus mindestens zwei jeweils für sich schraubbaren Teilen besteht, die auf dem Ankerstab im gegenseitigen Abstand voneinander und gegeneinander nicht verdrehbar, aber bei Lastüberschreitung in der Reihenfolge ihrer Belastung in Längsrichtung um einen vorgegebenen Abstand versetzbar sind, so daß sie nacheinander in Kraftschluß mit dem Ankerstab gelangen.

Auf diese Weise läßt sich, ohne die Schraubbarkeit der einzelnen Teile der Verankerungsmutter zu ihrem Aufbringen auf den Ankerstab zu beeinträchtigen, für die Zeit der Wirksamkeit der Verankerung eine Verstimmung der an den Kraftübertragungsrippen des Stabes angreifenden Vorsprünge der Verankerungsmutter erzielen. Dadurch wird es möglich, die bei einer einteiligen Verankerungsmutter annähernd sinusförmigen Linien des Verlaufs des Gleitwiderstandes einander so zu überlagern, daß sich einem Wellental, also der Entlastung eines Mutternteiles ein Wellenberg, also der volle Kraftschluß eines anderen Mutternteiles überlagert und dadurch der Gleitwiderstand vergleichmäßigt wird. Ein derart ausgebildetes Verankerungselement hat zudem den Vorteil, daß es im Zeitraum seiner Wirksamkeit nicht mehr schraubbar ist, d. h. sich auch nicht unbeabsichtigt lösen kann.

Für die drehfeste, aber längsverschiebliche Verbindung der Mutternteile gibt es verschiedene Möglichkeiten. Die Teile der Verankerungsmutter können eine unrunde Außenkontur, z. B. einen Sechskant aufweisen und von einer Hülse mit entsprechendem Querschnitt umschlossen sein. Die Teile können aber auch durch jeweils ein eine gegenseitige Drehung verhinderndes, aber in Längsrichtung stauchbares Zwischenstück miteinander verbunden sein.

Ein weiterer Vorteil der erfindungsgemäßen Verankerungsvorrichtung besteht darin, daß sie wartungsfrei ist. Sie kann deshalb nicht nur, wie bekannt, auf das luftseitige Ende eines Ankerstabes aufbringbar und gegen eine den Bohrlochmund umgebende Ankerplatte abstützbar sein, sondern auch im Bohrlochmund versenkt, ja sogar am verankerungsseitigen Ende des Ankerstabes anbringbar und in der Tiefe des Bohrloches in den Verbundkörper eingebettet sein. Dies hat den Vorteil, daß der für das Nachgeben der Verankerung luftseitig vorzusehende Überstand des Ankerstabes, der an der Ausbruchwand oft stört, in das Bohrloch verlegt werden kann.

Die Erfindung wird nachstehend anhand der in der Zeichnung dargestellten Ausführungsbeispiele näher erläutert. Es zeigt

Fig. 1 einen Längsschnitt durch einen Felsanker, bei dem die Verankerungsvorrichtung an der Luftseite angeordnet ist,

Fig. 2 die luftseitige Verankerungsvorrichtung in größerem Maßstab,

Fig. 3 einen Schnitt entlang der Linie III-III in Fig. 2,

Fig. 4 einen Längsschnitt durch einen Felsanker, bei dem die Verankerungsvorrichtung in der Tiefe des Bohrloches angeordnet ist,

Fig. 5 die bohrlochseitige Verankerungsvorrichtung in größerem Maßstab,

Fig. 6 einen Schnitt entlang der Linie VI-VI in Fig. 5,

Fig. 7 an einer Ausführungsform der Erfindung in einem stark vergrößerten Ausschnitt aus einem Längsschnitt durch eine Verankerungsvorrichtung das Zusammenwirken der Vorsprünge einer Verankerungsmutter mit den Kraftübertragungsrippen des Ankerstabes, die

Fig. 8 bis 10 in Teillängsschnitten verschiedene Phasen des Nachgebens einer nach Fig. 7 ausgebildeten Verankerungsvorrichtung, die

Fig. 11 und 12 Teillängsschnitte durch zwei andere Ausführungsformen einer Verankerungsvorrichtung, die

Fig. 13a und 13b in stark vergrößerter Teildarstellung den Gleitvorgang der Ausführungsform gemäß Fig. 12, die

Fig. 14 und 15 in vergrößertem Teilquerschnitt das Zusammenwirken unterbrochener Vorsprünge der Mutter mit den Rippen eines zweiteiligen Ankerstabes,

Fig. 16 einen Längsschnitt durch eine weitere Ausführungsform einer Verankerungsvorrichtung nach der Erfindung,

Fig. 17 einen Querschnitt entlang der Linie XVII-XVII in Fig. 16,

Fig. 18 einen Teil der Abwicklung des Ankerstabes nach Fig. 16,

Fig. 19 einen Teil der Abwicklung der Verankerungsmutter nach Fig. 16,

Fig. 20 eine andere Ausführungsform der Erfindung mit einer zweiteiligen Verankerungsmutter im Längsschnitt,

Fig. 21 eine Verankerungsvorrichtung mit einer Verankerungsmutter gemäß Fig. 20 zu Beginn ihres Wirksamwerdens,

Fig. 22 die Verankerungsvorrichtung nach Fig. 21 im voll wirksamen Zustand,

Fig. 23 einen Querschnitt entlang der Linie XXIII-XXIII in Fig. 22,

Fig. 24 ein Diagramm über den Verlauf der Verankerungskraft während des Nachgebens der Verankerungsvorrichtung nach Fig. 21, die

Fig. 25, 26 und 27 weitere Ausführungsformen für die Verbindung der Teile einer zweiteiligen Verankerungsmutter miteinander,

Fig. 28 einen der Fig. 1 ähnlichen Längsschnitt durch einen Felsanker, bei dem die Verankerungsvorrichtung an der Luftseite im Bohrlochmund angeordnet ist,

Fig. 29 einen Längsschnitt durch eine weitere Ausführungsform einer Verankerungsvorrichtung mit einer zweiteiligen Verankerungsmutter,

Fig. 30 die Abwicklung des Innenumfangs der Verankerungsmutter nach Fig. 29 und

Fig. 31 eine der Fig. 30 entsprechende Abwicklung mit in Längsrichtung gegeneinander versetzten Nocken.

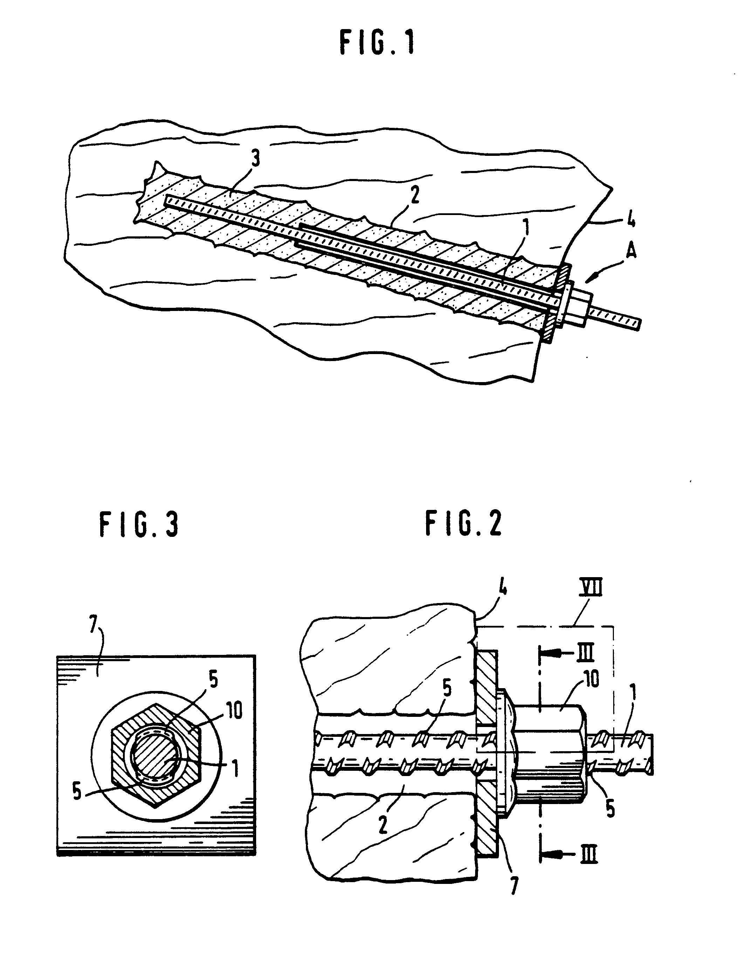

Fig. 1 zeigt einen Längsschnitt durch einen Felsanker mit einem Ankerstab 1, der in ein Bohrloch 2 eingesetzt ist. Das Bohrloch 2 ist auf seine ganze Länge durch ein erhärtendes Material 3 ausgefüllt, in dessen unterem Bereich der Ankerstab 1 über eine bestimmte Strecke verankert ist. Über den übrigen Bereich seiner Gesamtlänge ist der Ankerstab 1 frei dehnbar, z. B. durch Führung innerhalb eines Hüllrohres. An der Luftseite ist zur Sicherung der Ausbruchfläche 4 eine Verankerungsvorrichtung A angeordnet, die in verschiedenen Ausführungsformen nachfolgend beschrieben wird.

Als Ankerstab 1 wird zweckmäßig ein warmgewalzter Stahlstab verwendet, der an seiner Oberfläche mit ebenfalls warmgewalzten Kraftübertragungsrippen 5 versehen ist. Diese Rippen 5 sind entlang einer Schraubenlinie auf einander gegenüberliegenden Seiten des Stabes angeordnet und erstrecken sich nur über einen Teil seines Umfangs; sie bilden so ein Teilgewinde, auf das eine mit einem entsprechenden Innengewinde versehene Verankerungsmutter 10 aufgeschraubt werden kann. Zur Verankerung des Ankerstabes 1 legt sich die Verankerungsmutter 10 mit einem Bund gegen eine Ankerplatte 7 an, die sich gegenüber der Ausbruchfläche 4 abstützt (Fig. 2 und 3).

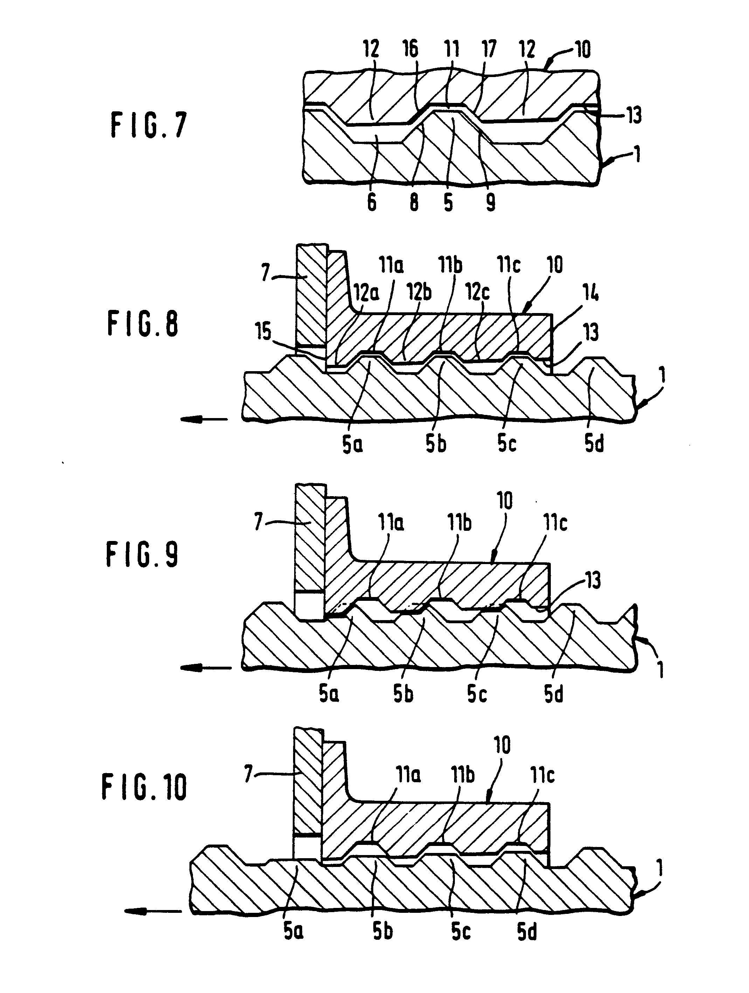

In den Fig. 7 bis 10 sind die Ausbildung und die Funktion einer Ausführungsform einer Verankerungsvorrichtung nach der Erfindung gemäß dem in Fig. 2 gestrichelt angedeuteten Detail VII in größerem Maßstab dargestellt. Dabei zeigt Fig. 7 in einem stark vergrößerten Teillängsschnitt den Eingriff des Gewindes der Verankerungsmutter 10 mit den Rippen des Ankerstabes 1.

Wie vor allem Fig. 7 erkennen läßt, sind die Flanken 8 und 9 der Kraftübertragungsrippen 5 des Ankerstabes 1 geneigt ausgebildet. Die Verankerungsmutter 10 ist an der Innenseite mit den Rippen 5 des Ankerstabes 1 entsprechenden Ausnehmungen 11 versehen, die von Vorsprüngen 12 gebildet sind. Dabei haben die Flanken 16 und 17 der Vorsprünge 12 eine entsprechende Neigung, so daß das aus den Vorsprüngen 12 und den Ausnehmungen 11 gebildete Mutterngewinde sich im Eingriff mit den Kraftübertragungsrippen 5 und der dazwischenliegenden Gewindekehlen 6 befindet, die der Oberfläche des Stabkerns entsprechen.

Die Innenfläche 13 der Verankerungsmutter 10 verläuft, wie vor allem Fig. 8 zeigt, konisch derart, daß der Innendurchmesser der Mutter an ihrem oberen Ende 14, das der Ankerplatte 7 und der durch einen Pfeil angedeuteten Kraftrichtung des Ankerstabes 1 entgegengesetzt ist, größer ist als der Innendurchmesser an dem gegenüberliegenden unteren Ende 15. Dadurch sind die Ausnehmungen 11a, 11b und 11c jeweils unterschiedlich tief, so daß bei Belastung des Ankerstabes 1 die aus den Flanken 16 der Vorsprünge 12 und der Innenfläche 13 der Mutter 10 gebildeten Kanten an den lastzugewandten Flanken 8 der ihnen zugeordneten Rippen 5 des Ankerstabes 1 in unterschiedlichen Höhen und mit unterschiedlichen Teilflächen angreifen.

Fig. 8 zeigt den Beginn der Verformung des Ankerstabes 1 nach Aufbringen der Verankerungsmutter 10. Bei steigender Längszugkraft des Ankerstabes 1 bewirken die an den Flanken 8 der Rippen 5a, b, c des Ankerstabes 1 anliegenden Flanken der Vorsprünge 12a, b, c der Mutter 10 eine plastische Verformung der Rippen, nämlich ein Abscheren derselben entlang der in Fig. 9 angedeuteten Scherflächen. Der besseren Übersicht halber ist das bei dieser plastischen Verformung verdrängte Material der Rippen nicht dargestellt.

Fig. 10 zeigt den Zustand nach Abscheren von drei aufeinanderfolgenden Rippen 5b, 5c, 5d des Ankerstabes 1, wobei die Mutter 10 gegenüber dem Stab 1 um einen vollen Gewindegang versetzt ist. Der Rippe 5b ist jetzt die Ausnehmung 11a, der Rippe 5c die Ausnehmung 11b und der Rippe 5d die Ausnehmung 11c zugeordnet. In dieser den Beginn eines Verformungsvorganges zeigenden Darstellung haben die Rippen 5a, b, c und d des Ankerstabes 1 unterschiedlich an Höhe verloren. Dies ist der Ausgangszustand für weitere Verformungen, die in entsprechender Weise folgen können.

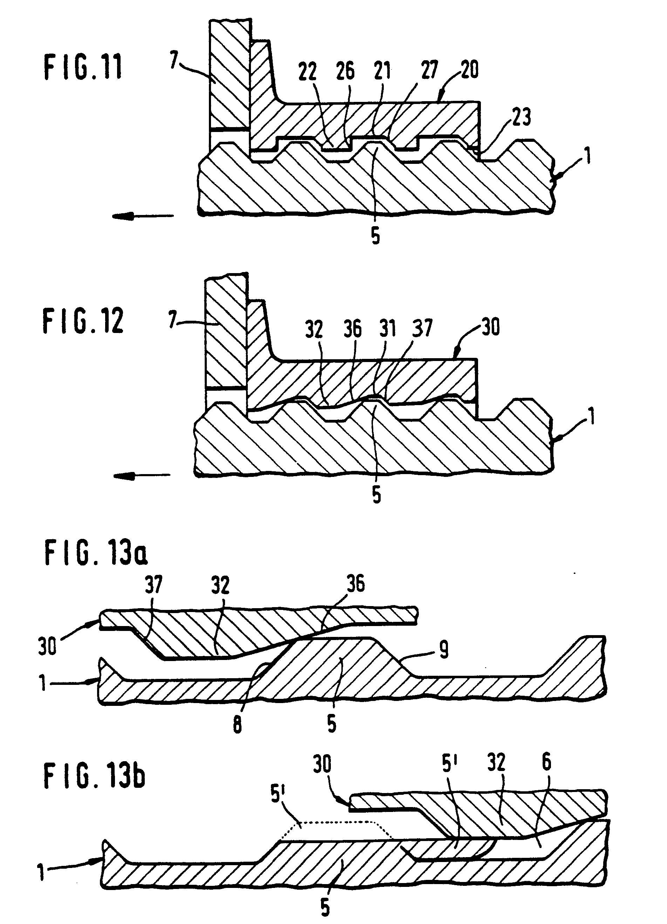

Um die Scherwirkung der Verankerungsmutter zu verbessern, können, wie in Fig. 11 dargestellt, zumindest auf der der Last zugewandten Seite die Flanken 26 der Vorsprünge 22 rechtwinklig zur Längsachse der Verankerungsmutter 20 angeordnet sein. Dadurch bilden die Flanken 26 zusammen mit der Innenfläche 23 der Mutter 20 Schneidkanten, die ein problemloses Abscheren der Rippen 5 in der jeweiligen Höhe gewährleisten. Die lastabgewandten Flanken 27 der Mutter 20 können in gleicher Weise wie die Flanken der Rippen 5 des Ankerstabes 1 geneigt sein, um ein problemloses Aufschrauben im Bereich der Ausnehmungen 21 zu gewährleisten.

Die Kombination von unterschiedlich ausgebildeten Flanken zwischen dem Gewinde des Stabes und dem der Mutter führt bei einem sich konisch vergrößernden Kerndurchmesser der Mutter auch bei gleicher Steigung zu einem Steigungsverzug. Dadurch befinden sich nicht wie beispielsweise gemäß Fig. 8 alle Rippen 5 von Anfang an im Eingriff mit der Mutter 10, sondern gelangen erst nach einem gewissen Verschiebeweg nacheinander in Eingriff mit der Mutter 20. Dies ist aus Fig. 11 ersichtlich, wo der Stab 1 mit der der Ankerplatte 7 nächstliegenden Rippe bereits fast an der unteren Schneidkante der Mutter anliegt, während sich die weiteren, der Last zugewandten Rippen des Stabes 1 noch im Abstand von den ihnen zugeordneten Schneidkanten der Mutter befinden. Dadurch wird eine weitere Vergleichmäßigung des Gleitwiderstandes erzielt.

Eine einem Fließvorgang vergleichbare Verformung der Kraftübertragungsrippen des Ankerstabes ergibt sich mit einer in den Fig. 12 sowie 13a und b dargestellten Ausbildung einer Verankerungsmutter 30, bei der die Lastzugewandten Flanken 36 der Vorsprünge 32 zwischen den Ausnehmungen 31 flacher geneigt sind als die entsprechenden Flanken 8 der Kraftübertragungsrippen 5 des Ankerstabes 1. Die lastabgewandten Flanken 37 können zur Gewährleistung des Schraubvorganges wiederum in gleicher Weise geneigt sein wie die entsprechenden Flanken 9 der Rippen 5 des

Stabes 1.

Der Verformungsvorgang durch eine solche Mutter ist in den Fig. 13a und 13b in größerem Maßstab dargestellt. Man erkennt hier, wie eine sehr flache Flanke 36 eines Vorsprungs 32 der Verankerungsmutter 30 an einer Rippe 5 des Ankerstabes 1 etwa nach Art einer Ziehdüse angreift und so im Wege einer Kaltverformung mit teilweiser Verfestigung den oberen, in Fig. 13b gestrichelt angedeuteten Teil 5' der Rippe 5 abträgt und in die anschließende Gewindekehle 6 transportiert. Auf diese Weise wird zugleich der Scherweg zwischen Mutter und Stab verlängert mit der Folge, daß die Reibungskraft länger wirkt.

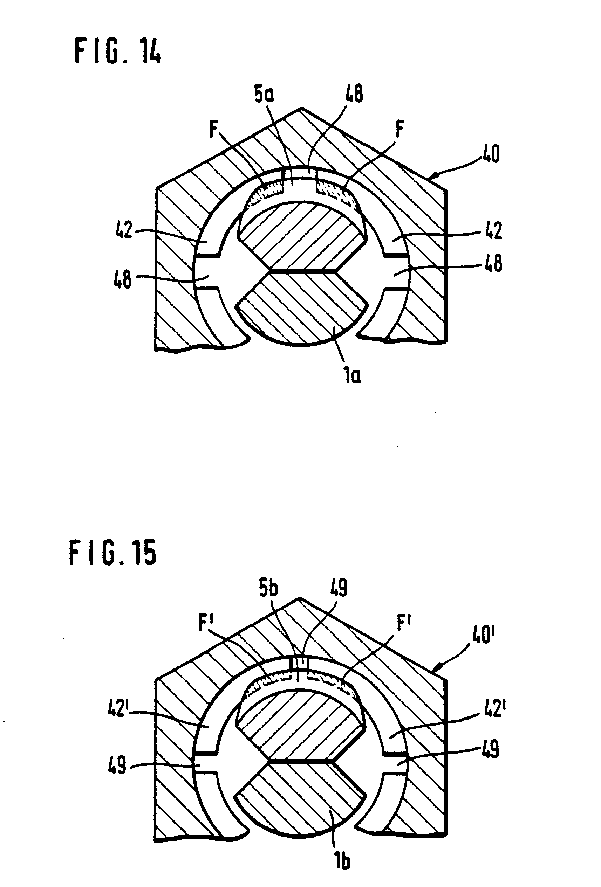

Eine weitere Möglichkeit zur Definition der Ankerkraft bzw. des Gleitwiderstandes, zugleich auch zum Ausgleich von Walztoleranzen bei der Herstellung der Ankerstäbe in einem warmen Walzvorgang zeigen die beiden Teilquerschnitte durch eine Verankerungsvorrichtung nach den Fig. 14 und 15. Dabei ist als Ankerstab ein zweiteiliger Stahlstab dargestellt, wobei jedes der beiden Teile an seiner Außenfläche mit Kraftübertragungsrippen versehen ist. Dabei zeigt Fig. 14 einen Ankerstab 1a mit verhältnismäßig hohen Rippen 5a, die einer Plustoleranz entsprechen, in Verbindung mit einer Verankerungsmutter 40, deren Vorsprünge 42 vergleichsweise breite Unterbrechungen 48 aufweisen. Diese Unterbrechungen 48 sind entlang des Innenumfangs der Mutter 40 mehrfach vorgesehen, um jeweils zwei dieser Unterbrechungen 48 mit den einander gegenüberliegenden Rippen 5a des Stabes 1a in Deckung bringen zu können. Die Ankerkraft wird so zwischen den Rippen 5a und den Vorsprüngen 42 nur im Umfang der schraffierten Teilflächen F übertragen.

In Fig. 15 ist ein Ankerstab 1b mit niedrigen Rippen 5b dargestellt, die einer Minustoleranz entsprechen. Demgemäß sind die Unterbrechungen 49 in den Vorsprüngen 42' schmaler gehalten, so daß die Teilflächen F', in denen die Ankerkraft übertragen wird, etwa denjenigen der Fig. 14 entsprechen. Für die praktische Verwendung werden verschiedene Typen von Verankerungsmuttern vorgesehen, so daß es nach Ermittlung der jeweiligen Toleranz eines Ankerstabes möglich ist, ihm die entsprechende Mutter zuzuordnen.

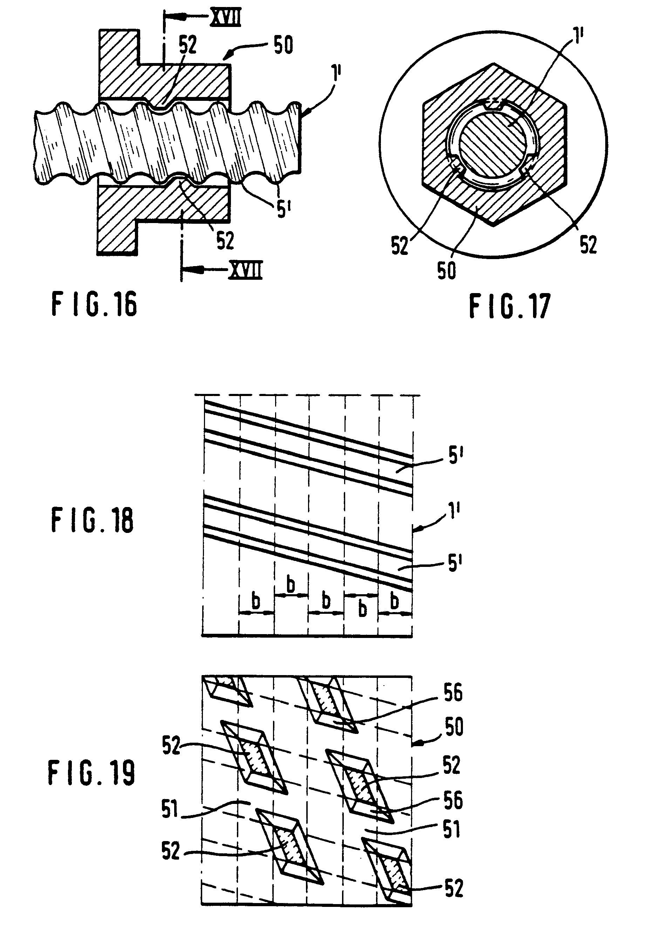

Bei der in den Fig. 16 bis 19 dargestellten Ausführungsform der Erfindung sind die die Verankerungsvorrichtung bildenden Teile, nämlich der Ankerstab 1' und die Verankerungsmutter 50 gewissermaßen umgekehrt ausgebildet wie bei den vorbeschriebenen Ausführungsformen. Der Ankerstab 1' ist hier mit jeweils vollständige Gewindegänge bildenden Kraftübertragungsrippen 5' versehen, während die Vorsprünge der Mutter 50 nur als Nocken 52 ausgebildet sind, zwischen denen sich die Ausnehmungen 51 befinden, welche die die Rippen 5' des Ankerstabes 1' aufnehmenden Gewindekehlen bilden.

Wie vor allem die nur einen Teil des Umfangs umfassenden Abwicklungen des Ankerstabes 1' (Fig. 18) bzw. der Verankerungsmutter 50 (Fig. 19) zeigen, kann als Verankerungsmutter eine solche mit zylindrischer Kernbohrung verwendet werden, in die nachträglich die Gewindekehlen 51 eingearbeitet sind. Bei dem dargestellten Ausführungsbeispiel sind die Nocken 52 in Längsrichtung der Mutter 50 gegeneinander versetzt. Bei Einwirkung einer Zugkraft auf den Ankerstab 1' kommen dessen Kraftübertragungsrippen 5' lediglich an den ihnen zugeordneten Flanken 56 der Nocken 52 zur Anlage. Bei Überschreitung der vorgegebenen Ankerlängszugkraft dringen die Nocken 52 der aus härterem Material bestehenden Mutter 50 in das Material der Rippen 5' des Ankerstabes 1' ein und schneiden so jeweils eine Bahn in die jeweilige Rippe ein. Die Breite der von den Nocken 52 abgeschälten Bahnen ist in Fig. 18 mit b bezeichnet. Die Nocken 52 sind, wie Fig. 19 erkennen läßt, so gegeneinander versetzt, daß bei axialem Gleiten der Mutter 50 um einen Rippenabstand die jeweils nachfolgende Nocke 52 auf einen Teil einer Rippe 5' des Stabes 1' stößt, der von der vorangegangenen Nocke noch nicht abgeschält wurde.

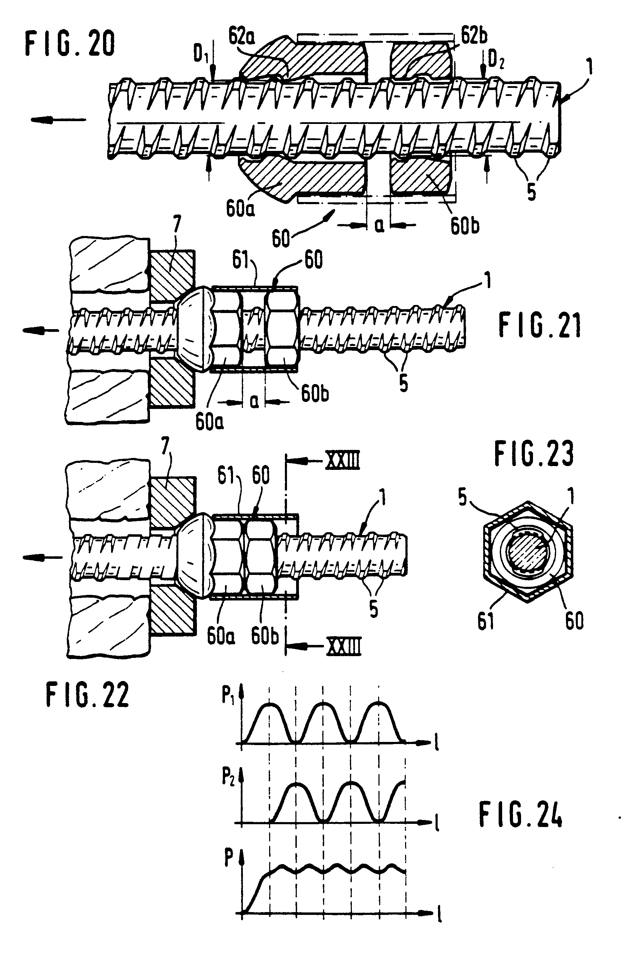

Eine besonders vorteilhafte Möglichkeit zur Vergleichmäßigung des Gleitwiderstandes einer Verankerungsvorrichtung nach der Erfindung ist in den Fig. 20 bis 23 wiederum im Zusammenhang mit einem Ankerstab 1 mit Kraftübertragungsrippen 5 und einer Verankerungsmutter 60 mit vollständigem Innengewinde dargestellt. Die Verankerungsmutter 60 besteht aus zwei Teilen 60a und 60b. Das mit der Ankerplatte 7 zusammenwirkende Teil 60a ist in an sich bekannter Weise an dem der Ankerplatte zugewandten Ende ballig ausgebildet, um ihm in einer konisch erweiterten Bohrung der Ankerplatte 7 eine gewisse Drehmöglichkeit zu geben. Das Teil 60b der Verankerungsmutter 60 hat die Form einer üblichen Mutter. Jedes der Teile 60a und 60b hat mindestens einen vollständigen Gewindegang, mit dem es auf den Ankerstab 1 aufgeschraubt werden kann. Der Durchmesser $D_2$ des der Last abgewandten Teils 60b der Mutter ist etwas größer als der Durchmesser $D_1$ des anderen Teils 60a (Fig. 20).

In dem in Fig. 21 dargestellten Zustand bei Beginn der Belastung befinden sich die beiden Teile 60a und 60b der Verankerungsmutter 60 in einem Abstand a voreinander. Dieser Abstand a entspricht bei der dargestellten Konfiguration etwa einer halben Umdrehung des Teils 60b. In dieser Lage befinden sich die beiden Teile 60a und 60b in einer Hülse 61, die eine Verdrehung der Teile 60a und 60b verhindert, aber eine Längsverschiebung zuläßt. Nach Belastung des Ankerstabes 1 in Richtung des Pfeils werden zunächst durch die Vorsprünge 62a des Teils 60a die entsprechenden Kraftübertragungsrippen 5 des Ankerstabes 1 im Wege der Kaltverformung abgetragen; dadurch verschiebt sich das Teil 60a um den Abstand a in Richtung auf das Teil 60b hin, das auf dem Ankerstab 1 zunächst in Ruhe bleibt. Bei weiterer Laststeigerung gelangen auch die Vorsprünge 62b zur Anlage an den Rippen 5 des Stabes 1.

Auf diese Weise gelingt entsprechend der Größe des Abstandes a eine Verstimmung der Gewindegänge der Teile 60a und 60b gegenüber dem Ankerstab 1 mit der Folge einer Vergleichmäßigung der Ankerkraft. Dies ist in Fig. 24 graphisch dargestellt. Dabei ist das obere Diagramm für die Ankerkraft $P_1$ dem Teil 60a und das untere Diagramm für die Ankerkraft $P_2$ dem Teil 60b der Verankerungsmutter 60 zugeordnet. Die über den Verschiebeweg 1 jeweils etwa sinusförmig verlaufende Ankerkraft kann durch diese Verstimmung so gesteuert werden, daß auf ein Wellental bei der Ankerkraft $P_1$ ein Wellenberg bei der Ankerkraft $P_2$ trifft. Dies führt in der Überlagerung zu dem wesentlich gleichmäßigeren, nur noch in der Höhe geringfügig schwankenden Verlauf der gesamten Ankerkraft P.

Je nach den Erfordernissen des jeweiligen Anwendungsfalles kann eine solche Verankerungsmutter auch aus mehreren Teilen bestehen, die dann in entsprechender Weise ausgebildet und zueinander angeordnet sind.

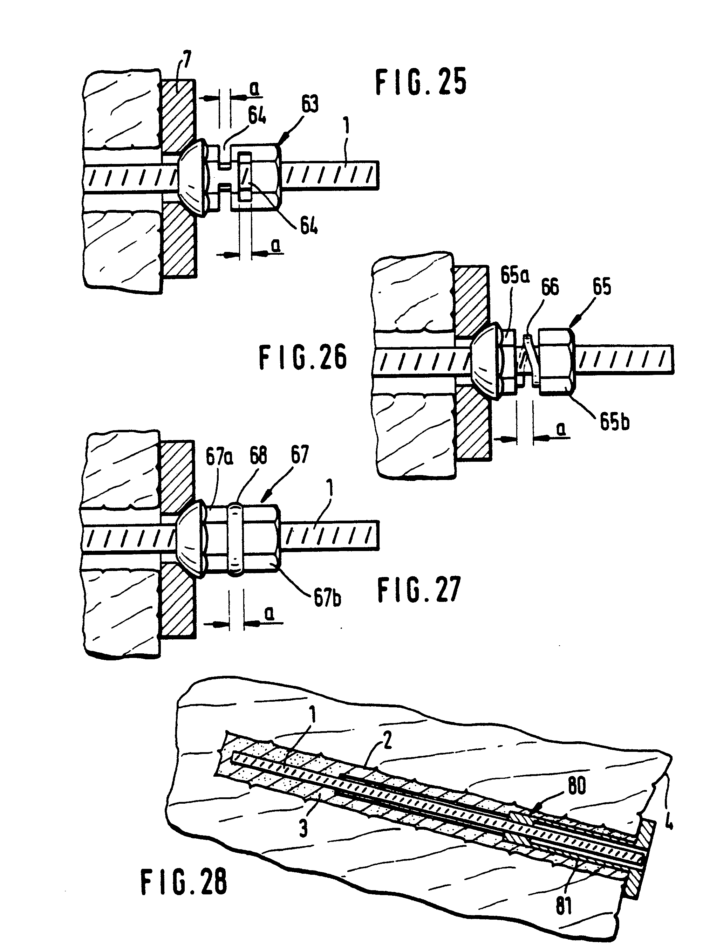

Weitere Möglichkeiten für die Verbindung zweier Mutternteile so, daß sie gegen eine Verdrehung gesichert, aber längsverschieblich auf dem Ankerstab angeordnet werden können, sind in den Fig. 25 bis 27 dargestellt. Die Mutter 63 (Fig. 25) ist durch querverlaufende Einschnitte 64 geschwächt, die bei Belastung zusammengequetscht werden. Nach Fig. 26 sind die beiden Teile 65a und 65b durch ein Federelement 66 miteinander verbunden; nach Fig. 27 übernimmt diese Funktion bei einer Mutter 67 ein z. B. gummielastisch zusammendrückbares Element 68.

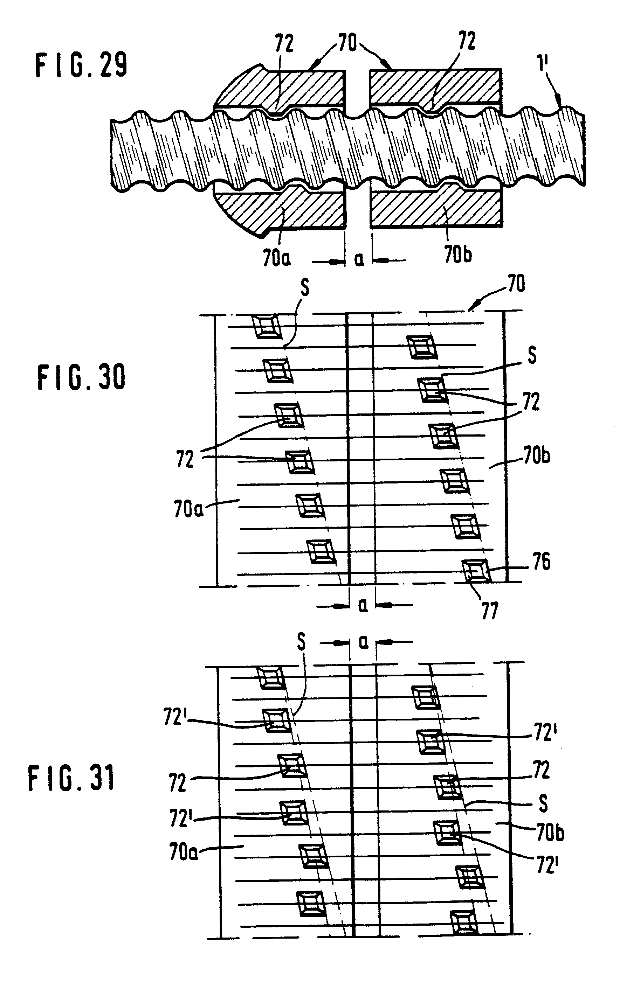

Während die Verankerungsvorrichtung nach den Fig. 20 bis 24 für einen Ankerstab 1 mit ein Teilgewinde bildenden Kraftübertragungsrippen 5 geeignet ist, ist in den Fig. 29 und 30 noch eine Verankerungsvorrichtung mit einer ebenfalls zweiteiligen Verankerungsmutter 70 dargestellt, deren beiden Teile 70a und 70b jeweils an ihrem Innenumfang mit Nocken 72 versehen, also zum Aufschrauben auf einen Ankerstab 1' mit durchgehenden Gewinderippen geeignet sind. Die Nocken 72 sind hier, wie aus der Abwicklung nach Fig. 30 zu erkennen ist, im Grundriß etwa quadratisch ausgebildet; die lastzugewandten Flanken 76 der Nocken 72 sind also genau so breit wie die lastabgewandten Flanken 77. Die Nocken können aber auch trapezförmig oder keilförmig ausgebildet sein, wobei die lastzugewandten Flanken 76 schmaler sind als die lastabgewandten Flanken 77 bzw. nur aus einer Keilspitze bestehen. Die Seitenflächen sind dann gegenüber der Kraftrichtung nach außen geneigt und bewirken so eine weitere Vergleichmäßigung des Gleitwiderstandes.

Während bei der in Fig. 30 dargestellten Ausführungsform die Nocken 72 jeweils auf einer Schraubenlinie S liegen, die als Verbindungslinie der lastzugewandten Flanken 76 gestrichelt angegeben ist, ist in einer entsprechenden Darstellung gemäß Fig. 31 angedeutet, wie die Nocken 72 bezüglich dieser Schraubenlinie S in Kraftrichtung gegeneinander versetzt sein können. Wenn diese Schraubenlinie S zugleich eine Flanke einer ein durchgehendes Gewinde bildenden Kraftübertragungsrippe des Ankerstabes 1' symbolisiert, dann gelangen bei dieser Konfiguration die jeweils von dieser Schraubenlinie S zurückgesetzten Nocken 72' etwas später in Kraftschluß als die an der Schraubenlinie liegenden Nocken 72, was zu einer weiteren Vergleichmäßigung des Gleitwiderstandes führt.

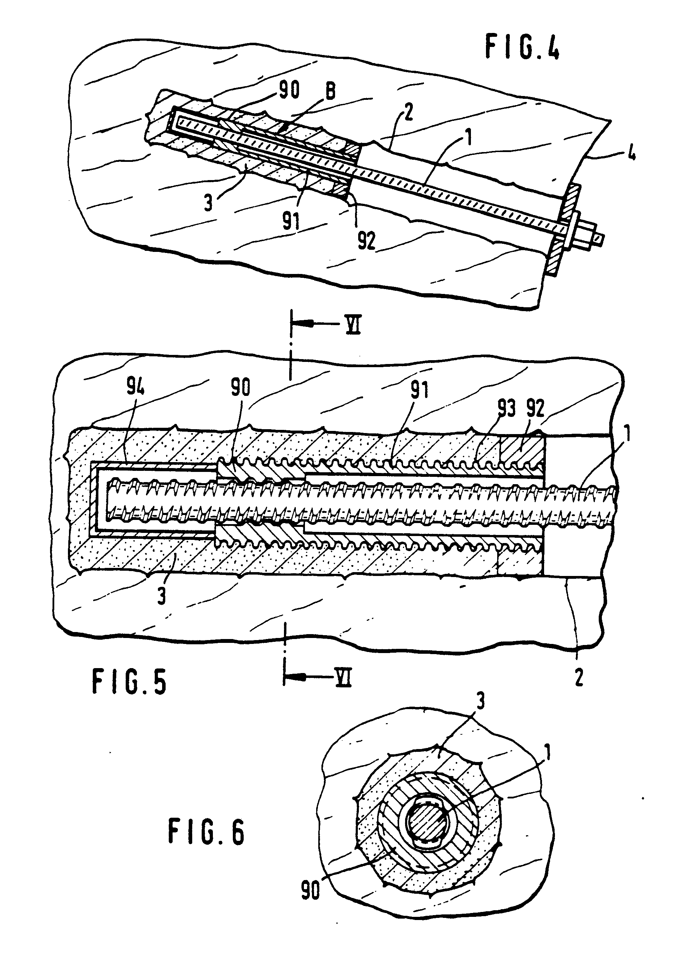

Ein Problem einer nachgiebigen Verankerung der beschriebenen Art besteht darin, daß zum Nachgeben der Verankerung ein Überstand des Ankerstabes über das Verankerungselement notwendig ist, der an der Luftseite des Ankers über die Ausbruchfläche 4 hinausragt und dort den Lichtraum des Tunnels, Stollens oder dergleichen beeinträchtigt. Da die Verankerungsvorrichtung nach der Erfindung wartungsfrei arbeitet, besteht die Möglichkeit, das Verankerungselement im Bohrloch selbst unterzubringen, und zwar entweder versenkt am Bohrlochmund, wie in Fig. 28, oder sogar in der Tiefe des Bohrloches, wie in Fig. 4 dargestellt.

Fig. 28 entspricht in allen wesentlichen Merkmalen der Ausführungsform der Fig. 1 mit der Ausnahme, daß die Verankerungsmutter 80 nicht an der Luftseite des Bohrloches 2 außen über die Ausbruchfläche 4 übersteht, sondern in den Bohrlochmund versenkt und durch ein Ankerrohr 81 gegenüber der Ankerplatte 7 zugfest abgestützt ist. Dadurch steht die gesamte, innerhalb des Ankerrohres 81 liegende Strecke des Ankerstabes 1 zum Nachgeben des Ankers zur Verfügung.

Bei dem in Fig. 4 dargestellten Ausführungsbeispiel ist eine Verankerungsmutter 90 in der Tiefe des Bohrloches 2 in einem die Verankerungsstrecke für den Ankerstab 1 bildenden Verbundkörper 3 angeordnet. Ein Ankerrohr 91 führt zu einem den Verbundkörper 3 begrenzenden Packer 92. Um den Verbund zu dem Verbundkörper zu verbessern, sind die Verankerungsmutter 90 sowie das Ankerrohr 91 am Außenumfang mit einer Profilierung 93 versehen. Das zum Nachgeben der Verankerung benötigte Ende des Ankerstabes 1 ist von einer Umhüllung 94 umgeben, um seinen Verbund mit dem Verbundkörper 3 zu verhindern.

**Patentansprüche**

1. Verankerungsvorrichtung für das Zugglied eines Ankers, insbesondere eines Felsankers, bei dem das Zugglied aus einem ein- oder mehrteiligen Stahlstab mit vorzugsweise auf einer Schraubenlinie liegenden und zumindest ein Teilgewinde bildenden Kraftübertragungsrippen (5) und die Verankerungsvorrichtung aus einem auf ein Ende des Ankerstabes (1) aufbringbaren und gegen das Gebirge abstützbaren Verankerungselement (A, B) bestehen, das mit zum Eingriff mit den Kraftübertragungsrippen (5) des Ankerstabes (1) geeigneten, zwischen Vorsprüngen gebildeten Ausnehmungen versehen ist, wobei die Verankerungsvorrichtung weiterhin so ausgebildet ist, daß bei Überschreitung einer vorgegebenen Längszugkraft des Ankerstabes (1) eine Relativbewegung zwischen diesem und dem Verankerungselement (A, B) bewirkbar ist, bis die Längszugkraft wieder unterschritten ist, dadurch gekennzeichnet, daß das Verankerungselement (A, B) aus einem Material besteht, das eine höhere Festigkeit aufweist als das Material des Ankerstabes (1), daß die Flanken der Vorsprünge des Verankerungselements zur Kraftübertragung jeweils nur mit Teilflächen an den Kraftübertragungsrippen (5) des Ankerstabes (1) anliegen und daß bei Überschreitung der vorgegebenen Längszugkraft die Kraftübertragungsrippen (5) des Ankerstabes (1) im Ausmaß der miteinander in Eingriff befindlichen Teilflächen abtragbar sind.

2. Verankerungsvorrichtung nach Anspruch 1, dadurch gekennzeichnet, daß das Verankerungselement (A, B) als Mutter (10, 20, 30, 40, 50, 60, 70) ausgebildet ist, bei der die Vorsprünge (12, 22, 32, 42, 52, 62, 72) zumindest ein Teilgewinde bilden und die Ausnehmungen (11, 21, 31, 51) mit den ein Schraubgewinde bildenden Kraftübertragungsrippen (5) des Ankerstabes (1) korrespondieren.

3. Verankerungsvorrichtung nach Anspruch 2, dadurch gekennzeichnet, daß die jeweils ein vollständiges Gewinde bildenden Vorsprünge (12, 22, 32, 42, 62) aufeinanderfolgender Gewindegänge der Verankerungsmutter (10, 20, 30, 40, 60) gegenüber dem Grund der Ausnehmungen (11, 21, 31,) eine in Richtung der auf den Ankerstab (1) wirkenden Längszugkraft zunehmende Höhe aufweisen und daß die Flanken (16, 26, 36) der Vorsprünge (12, 22, 32, 42, 62) an den lastzugewandten Flanken (8) der Kraftübertragungsrippen (5) des Ankerstabes (1) in einer solchen Weise angreifen, daß durch diese bei Überschreiten der vorgegebenen Längszugkraft die Kraftübertragungsrippen (5) stufenweise abtragbar sind.

4. Verankerungsvorrichtung nach Anspruch 3 mit einem Ankerstab (1), dessen Kraftübertragungsrippen (5) schräg zur Staboberfläche geneigte Flanken (8, 9) aufweisen, dadurch gekennzeichnet, daß die lastzugewandten Flanken (16, 26) der Vorsprünge (12, 22) des Verankerungselements (10, 20) die gleiche oder eine steilere Neigung aufweisen wie die entsprechenden Flanken (8) der Kraftübertragungsrippen (5) des Ankerstabes (1), so daß durch die jeweils von der Oberfläche und den Flanken (16, 26) der Vorsprünge (12, 22) gebildeten Kanten die Kraftübertragungsrippen (5) des Ankerstabes (1) durch Abscheren abtragbar sind.

5. Verankerungsvorrichtung nach Anspruch 4, dadurch gekennzeichnet, daß die Flanken (26) der Vorsprünge (22) der Verankerungsmutter (20) rechtwinklig zu seiner Längsachse verlaufen.

6. Verankerungsvorrichtung nach Anspruch 3 mit einem Ankerstab (1), dessen Kraftübertragungsrippen (5) schräg zur Staboberfläche geneigte Flanken (8, 9) aufweisen, dadurch gekennzeichnet, daß die lastzugewandten Flanken (36) der Vorsprünge (32) der Verankerungsmutter (30) flacher gene[.] sind als die entsprechenden Flanken (8) der Kraftübertragungsrippen (5) des Ankerstab[.] so daß durch die Flanken (36) der Vorsprü[.] (32) die Kraftübertragungsrippen (5) des Ankerstabes (1) im Wege der Kaltverfo[.] abtragbar sind.

7. Verankerungsvorrichtung nach ein[.] Ansprüche 3 bis 6, dadurch gekennzeichne[.] die Vorsprünge (42) der Verankerungsmutter (4[.] Unterbrechungen (48, 49) aufweisen.

8. Verankerungsvorrichtung nach Anspruch 7, dadurch gekennzeichnet, daß die Unterbrechungen (48, 49) in Richtung der Längsachse der Verankerungsmutter (40) miteinander fluchten.

9. Verankerungsvorrichtung nach Anspruch 2, dadurch gekennzeichnet, daß die Vorsprünge der Verankerungsmutter (50, 70) aus Nocken (52, 72) bestehen, die an der Innenseite des Verankerungselements in gegenseitigen Abständen voneinander entlang einer Schraubenlinie angeordnet sind und ein Teilgewinde bilden und daß die lastzugewandten Flanken (56, 76) und/oder Seitenflächen der Nocken (52, 72) an den jeweils vollständige Gewindegänge bildenden Kraftübertragungsrippen (5) des Ankerstabes (1) in einer solchen Weise angreifen, daß durch diese bei Überschreiten der vorgegebenen Längszugkraft die Kraftübertragungsrippen (5) jeweils über die Breite der Nocken (52, 72) abtragbar sind.

10. Verankerungsvorrichtung nach Anspruch 9, dadurch gekennzeichnet, daß die Nocken (52, 72) entlang der Schraubenlinie gleichmäßig verteilt angeordnet sind.

11. Verankerungsvorrichtung nach Anspruch 9 oder 10, dadurch gekennzeichnet, daß die Nocken (52, 72) aufeinanderfolgender Gewindegänge in Umfangsrichtung gegeneinander versetzt angeordnet sind.

12. Verankerungsvorrichtung nach Anspruch 11, dadurch gekennzeichnet, daß die Nocken (52) derart gegeneinander versetzt sind, daß sie in der Normalprojektion der Verankerungsmutter (50) gesehen jeweils nebeneinander erscheinen.

13. Verankerungsvorrichtung nach einem der Ansprüche 9 bis 12, dadurch gekennzeichnet, daß die Nocken (72) in Bezug auf die durch sie gebildete Schraubenlinie (S) in Längsrichtung der Verankerungsmutter (70) gegeneinander versetzt angeordnet sind.

14. Verankerungsvorrichtung nach Anspruch 13, dadurch gekennzeichnet, daß die Nocken (72) jeweils um den gleichen Betrag gegeneinander versetzt sind.

15. Verankerungsvorrichtung nach einem der Ansprüche 9 bis 14, dadurch gekennzeichnet, daß die Nockén (72) schräg zur Längsachse der Verankerungsmutter (70) verlaufende Seitenflächen aufweisen.

16. Verankerungsvorrichtung nach Anspruch 15, dadurch gekennzeichnet, däß die Nocken in der Draufsicht keilförmig ausgebildet sind.

17. Verankerungsvorrichtung nach einem der Ansprüche 1 bis 16, dadurch gekennzeichnet, daß die Verankerungsmutter (60, 70) aus zumindest zwei jeweils für sich schraubbaren Teilen (60a, 60b, 70a, 70b) besteht, die auf den Ankerstab (1) im gegenseitigen Abstand voneinander und gegeneinander nicht verdrehbar, aber bei Lastüberschreitung in der Reihenfolge ihrer Belastung in Längsrichtung um einen vorgegebenen Abstand (a) versetzbar sind, so daß sie nacheinander in Kraftschluß mit dem Ankerstab (1) gelangen.

18. Verankerungsvorrichtung nach Anspruch 17, dadurch gekennzeichnet, daß die Teile (60a, 60b) der Verankerungsmutter (60) eine unrunde Außenkontur, z. B. einen Sechskant, aufweisen und von einer Hülse (61) mit entsprechendem Querschnitt umschlossen sind.

19. Verankerungsvorrichtung nach Anspruch 17, dadurch gekennzeichnet, daß die Teile der Verankerungsmutter durch jeweils ein eine gegenseitige Drehung verhinderndes, aber in Längsrichtung stauchbares Zwischenstück (66, 68) miteinander verbunden sind.

20. Verankerungsvorrichtung nach einem der Ansprüche 1 bis 19, dadurch gekennzeichnet, daß das Verankerungselement (A) auf das luftseitige Ende des Ankerstabes (1) aufbringbar und gegen eine den Bohrlochmund umgebende Ankerplatte (7) abstützbar ist.

21. Verankerungsvorrichtung nach einem der Ansprüche 1 bis 19, dadurch gekennzeichnet, daß das Verankerungselement (B) auf das verankerungsseitige Ende des Ankerstabes (1) aufbringbar und in der Tiefe des Bohrloches in dem Verbundkörper (3) eingebettet ist.

**Claims**

1. An anchoring device for the tension member of an anchor, in particular a rock anchor, in which the tension member comprises a one or two-part steel rod with force-transmitting ribs (5), preferably lying on a helix and forming at least a partial thread, and the anchoring device comprises an anchoring member (A, B) which can be mounted at one end of the anchor rod (1), which abuts against the ground and which is provided with recesses suitable for engagement by the force-transmitting ribs (5) of the anchor rod (1) and formed between projections, wherein the anchoring device is so formed that when a predetermined longitudinal tensile force on the anchor rod (1) is exceeded a relative movement can take place between the latter and the anchoring member (A, B) until the longitudinal tensile force is no longer exceeded, characterised in that the anchoring member (A, B) consists of a material which is of greater strength than the material of the anchor rod (1), in that for force transmission the flanks of the anchoring member projections are each applied only with surface portions against the force-transmitting ribs (5) of the anchor rod (1) and in that when the predetermined longitudinal tensile force is exceeded the force-transmitting ribs (5) of the anchor rod (1) can be levelled to the extent of the mutually engaging surface portions.

2. An anchoring device according to Claim 1, characterised in that the anchoring member (A, B) is in the form of a nut (10, 20, 30, 40, 50, 60, 70), in which the projections (12, 22, 32, 42, 52, 62, 72) form at least one thread portion and the recesses (11, 21, 31, 51) correspond with the force-transmitting ribs (5) of the anchor rod (1) constituting a screw thread.

3. An anchoring device according to Claim 2, characterised in that the projections (12, 22, 32, 42, 62), each of which forms a complete thread, of consecutive threads of the anchoring nut (10, 20, 30, 40, 60) have, in relation to the base of the recesses (11, 21, 31), an increasing lead in the direction of the longitudinal force acting on the anchor rod (1), and in that the flanks (16, 26, 36) of the projections (12, 22, 32, 42, 62) engage on the load-facing flanks (8) of the force-transmitting ribs (5) of the anchor rod (1) in such a way that the force-transmitting ribs (5) can be gradually levelled thereby when the predetermined longitudinal tensile force is exceeded.

4. An anchoring device according to Claim 3 with an anchor rod (1) whose force-transmitting ribs (5) have flanks (8, 9) inclined obliquely towards the rod upper surface, characterised in that the load-facing flanks (16, 26) of the projections (12, 22) of the anchoring member (10, 20) have the same inclination as or a steeper inclination than the corresponding flanks (8) of the force-transmitting ribs (5) of the anchor rod (1), so that the force-transmitting ribs (5) of the anchor rod (1) can be levelled by being sheared off by the edges formed respectively by the surface and flanks (16, 26) of the projections (12, 22).

5. An anchoring device according to Claim 4, characterised in that the flanks (26) of the projections (22) of the anchoring nut (20) extend at right angles to its longitudinal axis.

6. An anchoring device according to Claim 3 with an anchor rod (1) whose force-transmitting ribs (5) have flanks (8, 9) inclined obliquely towards the rod upper surface, characterised in that the load-facing flanks (36) of the projections (32) of the anchoring nut (30) are inclined more gently than the corresponding flanks (8) of the force-transmitting ribs (5) of the anchor rod (1), so that the force-transmitting ribs (5) of the anchor rod (1) can be levelled by way of cold deformation by the flanks (36) of the projections (32).

7. An anchoring device according to any one of Claims 3 to 6, characterised in that the projections (42) of the anchoring nut (40) have interruptions (48, 49).

8. An anchoring device according to Claim 7, characterised in that the interruptions (48, 49) align with one another in the direction of the longitudinal axis of the anchoring nut (40).

9. An anchoring device according to Claim 2, characterised in that the projections of the anchoring nut (50, 70) comprise cams (52, 72) which are disposed on the inside of the anchoring member at mutual distances apart along a helix and form a thread portion, and in that the load-facing flanks (56, 76) and/or side faces of the cams (52, 72) engage on the force-transmitting ribs (5) of the anchor rod (1), each of which form complete threads, in such a way that the force-transmitting ribs (5) can be levelled thereby, in each case across the width of the cams (52, 72), when the predetermined longitudinal tensile force is exceeded.

10. An anchoring device according to Claim 9, characterised in that the cams (52, 72) are disposed spaced apart uniformly along the helix.

11. An anchoring device according to Claim 9 or 10, characterised in that the cams (52, 72) of successive threads are disposed offset relative to one another in peripheral direction.

12. An anchoring device according to Claim 11, characterised in that the cams (52) are disposed offset relative to one another in such a way that, viewed in the normal projection of the anchoring nut (50), they each appear to be side by side.

13. An anchoring device according to any one of Claims 9 to 12, characterised in that the cams (72) are disposed offset relative to one another in relation to the helix (S) formed by them in the longitudinal direction of the anchoring nut (70).

14. An anchoring device according to Claim 13, characterised in that the cams (72) are each offset relative to one another by the same amount.

15. An anchoring device according to any one of Claims 9 to 14, characterised in that the cams (72) have lateral surfaces extending obliquely to the longitudinal axis of the anchoring nut (70).

16. An anchoring device according to Claim 15, characterised in that the cams are wedge-shaped in plan view.

17. An anchoring device according to any one of Claims 1 to 16, characterised in that the anchoring nut (60, 70) comprises at least two parts (60a, 60B, 70a, 70B) each of which can be screwed per se, which are disposed on the anchor rod (1) at a mutual distance apart and cannot rotate relative to one another but which can be displaced by a predetermined distance (a) in longitudinal direction when the load is exceeded in the sequence of its loading so that they come successively into force-locking contact with the anchor rod (1).

18. An anchoring device according to Claim 17, characterised in that the parts (60a, 60B) of the anchoring nut (60) have a non-circular outer contour, e.g. a hexagon, and are surrounded by a sleeve of corresponding cross-section.

19. An anchoring device according to Claim 17, characterised in that the parts of the anchoring nut are joined together in each case by an intermediate part (66, 68) preventing mutual rotation but compressible in longitudinal direction.

20. An anchoring device according to any one of Claims 1 to 19, characterised in that the anchoring member (A) can be mounted at the external end of the anchor rod (1) and can bear against an anchor plate (7) surrounding the borehole orifice.

21. An anchoring device according to any one of Claims 1 to 19, characterised in that the anchoring member (B) can be mounted at the end of the anchor rod (1) on the anchoring side and is embedded in a bonding substance (3) in the depth of the borehole.

**Revendications**

1. Dispositif d'ancrage pour l'élément de traction d'une ancre, notamment d'une ancre de rocher, dans lequel l'élément de traction consiste en une barre d'acier en une ou plusieurs parties qui est munie de nervures de transmission de force (5) qui sont situées de préférence en hélice et qui forment au moins un filetage partiel, et le dispositif d'ancrage consiste en un élément d'ancrage (A, B) qui peut être mis en place à une extrémité de la barre d'ancre (1), qui peut s'appuyer contre la roche, et qui est muni d'évidements formés entre des parties en saillie et aptes à s'engager avec les nervures de transmission de force (5) de la barre d'ancre (1), le dispositif d'ancrage étant en outre configuré de telle sorte que lors du dépassement d'une force de traction longitudinale prédéterminée de la barre d'ancre (1), un mouvement relatif entre cette dernière et l'élément d'ancrage (A, B) peut être engendré jusqu'à ce qu'on reste à nouveau en-dessous de cette force de traction longitudinale, caractérisé en ce que l'élément d'ancrage (A, B) est réalisé en un matériau qui présente une résistance supérieure à celle du matériau de la barre d'ancre (1), en ce que les flancs des parties em saillie de l'élément d'ancrage ne s'appuient respectivement, en vue de la transmission de force, que contre des faces partielles des nervures de transmission de force (5) de la barre d'ancre (1), et en ce que lors du dépassement de la force de traction longitudinale prédéterminée, les nervures de transmission de force (5) de la barre d'ancre (1) peuvent être supprimées de façon proportionnelle aux faces partielles qui se trouvent en engagement mutuel.

2. Dispositif d'ancrage selon la revendication 1, caractérisé en ce que l'élément d'ancrage (A, B) est réalisé sous la forme d'un écrou (10, 20, 30, 40, 50, 60, 70), dans lequel les parties en saillie (12, 22, 32, 42, 52, 62, 72) forment au moins un filetage partiel et les évidements (11, 21, 31, 51) correspondent avec les nervures de transmission de force (5) de la barre d'ancre (1), lesquelles forment un filetage de boulon.

3. Dispositif d'ancrage selon la revendication 2, caractérisé en ce que les parties en saillie (12, 22, 32, 42, 62) - formant chacune un filet complet - de pas de vis successifs de l'écrou d'ancrage (10, 20, 30, 40, 60) présentent par rapport au fond des évidements (11, 21, 31) une hauteur augmentant en direction de la force de traction longitudinale agissant sur la barre d'ancre (1), et en ce que les flancs (16, 26, 36) des parties en saillie (12, 22, 32, 42, 62) agissent sur les flancs tournés vers la charge (8) des nervures de transmission de force (5) de la barre d'ancre (1) d'une manière telle qu'ils peuvent supprimer progressivement les nervures de transmission de force (5), lors du dépassement de la force de traction longitudinale prédéterminée.

4. Dispositif d'ancrage selon la revendication 3, avec une barre d'ancre (1) dont les nervures de transmission de force (5) présentent des flancs (8, 9) inclinés en oblique par rapport à la surface de la barre, caractérisé en ce que les flancs tournés vers la charge (16, 26) des parties en saillie (12, 22) de l'élément d'ancrage (10, 20) présentent la même inclinaison ou une inclinaison plus forte que celle des flancs correspondants (8) des nervures de transmission de force (5) de la barre d'ancre (1), de sorte que les bords respectivement formés par la surface et les flancs (16, 26) des parties en saillie (12, 22) peuvent supprimer par cisaillement les nervures de transmission de force (5) de la barre d'ancre (1).

5. Dispositif d'ancrage selon la revendication 4, caractérisé en ce que les flancs (26) des parties en saillie (22) de l'écrou d'ancrage (20) s'étendent perpendiculairement à son axe longitudinal.

6. Dispositif d'ancrage selon la revendication 3, avec une barre d'ancre (1) dont les nervures de transmission de force (5) présentent des flancs (8, 9) inclinés en oblique par rapport à la surface de la barre, caractérisé en ce que les flancs tournés vers la charge (36) des parties en saillie (32) de l'écrou d'ancrage (30) présentent une inclinaison moins forte que celle des flancs correspondants (8) des nervures de transmission de force (5) de la barre d'ancre (1), de sorte que les flancs (36) des parties en saillie (32) peuvent supprimer par déformation à froid les nervures de transmission de force (5) de la barre d'ancre (1).

7. Dispositif d'ancrage selon une des revendications 3 à 6, caractérisé en ce que les parties en saillie (42) de l'écrou d'ancrage (40) présentent des interruptions (48, 49).

8. Dispositif d'ancrage selon la revendication 7, caractérisé en ce que les interruptions (48, 49) sont mutuellement alignées dans le sens de l'axe longitudinal de l'écrou d'ancrage (40).

9. Dispositif d'ancrage selon la revendication 2, caractérisé en ce que les parties en saillie de l'écrou d'ancrage (50, 70) consistent en des ergots (52, 72) qui sont disposés sur le côté intérieur de l'élément d'ancrage mutuellement distants entre eux le long d'une hélice et forment un filetage partiel, et en ce que les flancs tournés vers la charge (56, 76) et/ou les faces latérales des ergots (52, 72) agissent sur les nervures de transmission de force (5) de la barre d'ancre (1) - lesquelles forment respectivement des pas de vis complets - d'une manière telle qu'ils peuvent supprimer respectivement les nervures de transmission de force (5) sur la largeur des ergots (52, 72) lors du dépassement de la force de traction longitudinale prédéterminée.

10. Dispositif d'ancrage selon la revendication 9, caractérisé en ce que les ergots (52, 72), sont régulièrement répartis le long de l'hélice.

11. Dispositif d'ancrage selon la revendication 9 ou 10, caractérisé en ce que les ergots (52, 72), de pas de vis successifs sont mutuellement décalés dans le sens périphérique.

12. Dispositif d'ancrage selon la revendciation 11, caractérisé en ce que les ergots (52) sont mutuellement décalés de telle sorte que, vus dans la projection normale de l'écrou d'ancrage (50), ils apparaissent situés les uns à côté des autres.

13. Dispositif d'ancrage selon une des revendications 9 à 12, caractérisé en ce que les ergots (72) sont mutuellement décalés dans le sens longitudinal de l'écrou d'ancrage (70) par rapport à l'hélice qu'ils forment.

14. Dispositif d'ancrage selon la revendication 13 caractérisé en ce que les ergots (72) sont respectivement décalés du même montant les uns par rapport aux autres.

15. Dispositif d'ancrage selon une des revendciations 9 à 14, caractérisé en ce que les ergots (72) présentent des faces latérales s'étendant en oblique par rapport à l'axe longitudinal de l'écrou d'ancrage (70).

16. Dispositif d'ancrage selon la revendication 15, caractérisé en ce que les ergots sont, vus de dessus, cunéiformes.

17. Dispositif d'ancrage selon une des revendciations 1 à 16, caractérisé en ce que l'écrou d'ancrage (60, 70) est constitué d'au moins deux parties (60a, 60b, 70a, 70b) indépendamment vissables, qui sont disposées sur la barre d'ancre (1) à distance mutuelle et sans possibilité de rotation relative mais cependant, lors du dépassement de la charge, relativement déplaçables d'une distance prédéterminée (a) dans l'ordre de leur sollicitataion, de sorte qu'elles viennent successivement en liaison positive avec la barre d'ancre (1).

18. Dispositif d'ancrage selon la revendication 17, caractérisé en ce que les parties (60a, 60b) de l'écrou d'ancrage (60) présentent un contour extérieur non rond, par exemple hexagonal, et sont entourées par un manchon (61) de section correspondante.

19. Dispositif d'ancrage selon la revendication 17, caractérisé en ce que les parties de l'écrou d'ancrage sont respectivement assemblées entre elles par un élément intermédiaire (66, 68) empêchant leur rotation en sens opposés, mais refoulable dans le sens longitudinal.

20. Dispositif d'ancrage selon une des revendications 1 à 19, caractérisé en ce que l'élément d'ancrage (A) peut être mis en place sur l'extrémité de la barre d'ancre (1) qui est tournée vers l'air extérieur, et peut s'appuyer contre une plaque d'ancre (7) entourant l'embouchure du trou de mine.

21. Dispositif d'ancrage selon une des revendications 1 à 19, caractérisé en ce que l'élément d'ancrage (B) peut être mis en place sur l'extrémité de la barre d'ancre (1) qui se trouve du côté d'ancrage et est encastré dans la profondeur du trou de mine, dans le matériau liant (3).

# FIG.1

# FIG.3

# FIG.2

FIG.4

FIG.5

FIG.6

FIG.7

FIG.8

FIG.9

FIG.10

FIG.11

FIG.12

FIG.13a

FIG.13b

FIG. 14

FIG. 15

FIG.16

FIG.17

FIG.18

FIG.19

FIG. 20

FIG. 21

FIG. 22

FIG. 23

FIG. 24

FIG. 25

FIG. 26

FIG. 27

FIG. 28

FIG.29

FIG.30

FIG.31